# EUROPÄISCHE PATENTSCHRIFT

(11) **EP 1 273 485 B1**
(45) Veröffentlichungstag und Bekanntmachung des Hinweises auf die Patenterteilung: **31.08.2005**
(21) Anmeldenummer: 02014203.0
(22) Anmeldetag: 26.06.2002
(51) Int. Cl.: B60R 21/16, B60R 21/20

(54) **Airbagmodul mit einem Gassack mit einem adaptiven Volumen**
Airbag module with an inflatable member with variable volume
Module d'airbag avec un coussin gonflable à volume variable

(30) Priorität: 06.07.2001 DE 10132932
(43) Veröffentlichungstag der Anmeldung: 08.01.2003
(73) Patentinhaber: ADAM OPEL AG, 65423 Rüsselsheim (DE)
(72) Erfinder: Rick, Ulrich, Dipl.-Ing., 55595 Roxheim (DE)

(56) Entgegenhaltungen:
- EP-A- 1 112 902
- DE-A- 19 756 977

## Beschreibung

Die Erfindung bezieht sich auf ein Airbagmodul mit einem Gassack mit einem adaptiven Volumen gemäß den Merkmalen des Oberbegriffs des Patentanspruches 1.

Die DE 198 13 832 A1 offenbart einen Gassack mit einem variablen Volumen für ein Airbagmodul. Für die Begrenzung des Gassackvolumens ist mindestens ein am Gassack lose geführtes und nach dem Zusammenraffen des Gassacks mit seinen Enden festgelegtes, ab einer bestimmten Belastung bei der Entfaltung des Gassacks lösbares oder reißbares Zugelement vorgesehen.

Aus der DE 298 13 082 U1 ist ein Gassack für ein Airbagmodul bekannt, der mit einem mehrstufigen Gasgenerator in Strömungsverbindung steht, wobei der Gassack ein erstes und ein zweites Gewebeteil aufweist, die jeweils annähernd kongruent sind und mindestens eine Reißnaht im intakten Zustand eine Falte bildet, wodurch das Volumen des Gassacks gegenüber einem Zustand mit zerstörter Reißnaht verringert ist. Die Falte ist in einem Gewebestreifen ausgebildet, der mit dem Rand des ersten Gewebeteils und dem Rand des zweiten Gewebeteils vernäht ist. Bei einer geringen Fahrzeuggeschwindigkeit und/oder einem geringen Gewicht des zurückzuhaltenden Fahrzeuginsassen sowie einem geringen Abstand des Fahrzeuginsassen von der Abdeckung des Gassacks wird nur eine erste Stufe des Gasgenerators aktiviert, so dass eine vergleichsweise geringe Menge von Druckgas zum Entfalten des Gassacks bereitgestellt wird. In diesem Fall bleibt die Reißnaht intakt und der Gassack wird trotz des geringen Gasvolumens voll entfaltet. Bei einer höheren Fahrzeuggeschwindigkeit und/oder hohem Gewicht des Fahrzeuginsassen sowie einem großen Abstand des Fahrzeuginsassen von der Abdeckung des Gassacks werden dagegen mehrere Stufen des Gasgenerators aktiviert, so dass eine relativ große Menge Druckgas bereitgestellt wird. Dies führt dazu, dass die Reißnaht beim Entfalten des Gassacks zerstört wird und der Gassack zur Aufnahme der größeren Druckgasmenge ein größeres Volumen aufweist. Als nachteilig erweist sich hierbei die mehrteilige Ausführung des Gassacks sowie das Erfordernis eines relativ großen Airbaggehäuses zur Aufnahme des kompletten Gassacks.

Im Weiteren beschreibt die EP 0 803 407 A1 einen Gassack für ein Airbagmodul, der ein Vorder- und ein Rückteil aus einem elastischen Material umfasst, die an korrespondierenden umlaufenden Verbindungskanten zusammengefügt sind und ein mit Gas zu befüllendes Volumen definieren. An dem Rückteil, das mit einem Gasgenerator verbunden ist, ist zwischen der Verbindungskante und einer Befüllöffnung eine ringförmige Falte ausgebildet, die durch eine Reißnaht gesichert ist. Die Reißnaht wird oberhalb eines bestimmten Drucks zerstört, wonach das Volumen des Gassacks gegenüber dem bei einer intakten Reißnaht vergrößert ist.

Weiterhin offenbart die DE 198 32 981 A1 einen mit einem Mehrstufengasgenerator gekoppelten Gassack, der in seinem Inneren eine gasdurchlässige Trennwand aufweist, die das Innere des Gassacks im vollständig aufgeblasenen Zustand in zwei Kammern unterteilt. Es sind Haltemittel vorgesehen, die ein Entfalten des die zweite Kammer begrenzenden Teils des Gassacks vor dem Erreichen eines bestimmten Gasinnendrucks verhindern und nach Überschreiten dieses bestimmten Gasinnendrucks das vollständige Aufblasen der zweiten Kammer erlauben. Die Haltemittel umfassen eine Reißnaht, die aufeinanderliegende Abschnitte des die zweite Kammer begrenzenden Teils des Gassacks miteinander verbindet.

Darüber hinaus ist aus der WO 97/46425 ein mit einem Gasgenerator verbundener Gassack bekannt, der mittels eines reißbaren Materials in Sektionen mit unterschiedlichen Volumina unterteilt ist, wobei eine erste Sektion vor einer zweiten Sektion mit Gas befüllt wird und das Material nach dem Befüllen der ersten Sektion reißt, um die zweite Sektion zu befüllen.

Des Weiteren offenbart die DE-A-27 22 551 einen mit einem Mehrstufengasgenerator gekoppelten Gassack, der bei einem Unfall in Abhängigkeit von der Stärke der Verzögerung durch mehrere nacheinander auslösbare Zündstufen mit dem zur Verfügung stehenden Gas bei ansteigendem Druck befüllbar ist. Im Ausgangszustand ist ein Teil des Gassacks durch eine Naht oder dergleichen abgetrennt. Durch den ansteigenden Druck wird die Naht zerstört, so dass im Endzustand das gesamte Volumen des Gassacks verfügbar ist.
Schließlich offenbart die gattungsbildende DE 197 56 977 A1 einen Airbag für ein Kraftfahrzeug, der von einem Gasgenerator mit zumindest zwei Leistungsstufen aufblasbar ist, wobei das Volumen des Airbags durch eine an der Airbaghülle angreifenden Haltevorrichtung begrenzbar ist. Bei der Aktivierung der zweiten Leistungsstufe des Gasgenerators soll die Verbindung zur Airbaghülle in der Haltevorrichtung gelöst werden, damit der Airbag sein vollständiges Volumen erreichen kann. Die Haltevorrichtung weist dabei mechanisch bewegbare Bauteile als lösbare Verbindungsmittel zur Airbaghülle auf, die elektrisch oder magnetisch angesteuert oder durch den Gasdruck der zweiten Leistungsstufe bewegt oder auch als Klemmvorrichtungen ausgebildet sein können. Die Airbaghülle kann auch ein oder mehrere Fangbänder enthalten, welche in der Haltevorrichtung lösbar gehalten werden. Eine solche Haltevorrichtung ist jedoch steuerungstechnisch aufwendig aufgebaut, bei der auch zusätzliche Maßnahmen am Airbaggehäuse oder Gasgenerator notwendig sind.

Es ist Aufgabe der Erfindung, ein Airbagmodul der eingangs genannten Art zu schaffen, mit dem eine hohe Sicherheit für die Insassen bei einem gleichzeitig kompakten Aufbau sichergestellt ist.

Erfindungsgemäß wird die Aufgabe durch die Merkmale des Patentanspruches 1 gelöst.

Aufgrund dieser Maßnahmen ist eine hohe Sicherheit für die Insassen des Kraftfahrzeuges gewährleistet, da der erste Sektor und/oder der zweite Sektor des Gassacks des Airbagmoduls in Abhängigkeit von dem durch den Gasgenerator zur Verfügung gestellten Druckgasvolumen beaufschlagt wird, wobei die beiden Sektoren einstückig miteinander verbunden sind und deren Beaufschlagungsreihenfolge durch das Haltemittel sichergestellt ist, das oberhalb eines bestimmten Gasdrucks versagt. Die Art der Faltung ermöglicht eine kompakte Bauform des Airbagmoduls, da ein Teil des Gassacks, nämlich der erste Sektor, konventionell in dem Gehäuse gefaltet ist und ein anderer Teil, nämlich der zweite Sektor, benachbart zum Füllstutzen gefaltet ist. Diese Anordnung des ersten und des zweiten Sektors des Gassacks stellt auch eine störungsfreie Entfaltung der einzelnen Sektoren des Gassacks in den unterschiedlichen Leistungsstufen des Gasgenerators sicher, da der zweite Sektor in zusammengefalteten Zustand die Einströmöffnung des ersten Sektors, der in jedem Fall zuerst mit Druckgas beaufschlagt wird, bildet.

Bevorzugt ist die dem zweiten Sektor zugeordnete Öffnung des Gassacks auf einem Flansch des Füllstutzens umlaufend gasdicht befestigt. Hierzu kann die Öffnung, der Einblasmund, des Gassacks mit dem Flansch verschweißt oder verklebt werden.

Zur zuverlässigen gasdichten Befestigung des Gassacks an dem Airbaggehäuse ist zweckmäßigerweise die dem zweiten Sektor zugeordnete Öffnung des Gassacks auf einem Flansch des Füllstutzens mittels eines Halteelementes umlaufend befestigt.

Vorteilhafterweise ist der Flansch auf der Außenseite des Füllstutzens umlaufend angeformt. Somit befinden sich die dem zweiten Sektor zugeordnete Öffnung und der zweite Sektor selbst auf der Außenseite des Füllstutzens weshalb die Durchströmung des Füllstutzens mit dem Druckgas zur Entfaltung des Gassacks nicht beeinflusst ist.

Alternativ hierzu ist der Flansch auf der Innenseite des Füllstutzens umlaufend angeformt. Diese Ausgestaltung ermöglicht die kompakte Bauform des Airbagmoduls.

Zur Sicherstellung einer hohen Funktionstüchtigkeit des Airbagmoduls bei gleichzeitig kompakter Bauweise ist vorzugsweise der erste Sektor in einer flächigen Packung in dem Airbaggehäuse und der zweite Sektor in einer im Querschnitt im Wesentlichen rechteckförmigen Packung ringförmig am inneren oder äußeren Umfang des Füllstutzens gefaltet.

Bevorzugt ist das dem ersten Sektor zugeordnete Haltemittel als eine einstückige Abdeckung des Gassacks ausgebildet, die das Airbaggehäuse zur Überdeckung zumindest des ersten Sektors bereichsweise überspannt und endseitig an einer dem zweiten Sektor zugeordneten Falte befestigt ist. In einer ersten Leistungsstufe des Gasgenerators versagt die Abdeckung und gibt den ersten Sektor des Gassacks zur Entfaltung frei, der vollständig mit Druckgas gefüllt eine sichere Rückhaltung des Fahrzeuginsassen bewirkt, wobei der zweite Sektor über die Falte in seinem zusammengefalteten Zustand gehalten wird. In einer darauffolgenden Leistungsstufe des Gasgenerators wird der zweiten Sektor zu Entfaltung freigegeben, wonach das gesamte Volumen des einstückigen Gassacks mit Druckgas gefüllt ist.

Nach einer alternativen Ausgestaltung des Erfindungsgedankens ist die Abdeckung dem ersten und dem zweiten Sektor zugeordnet und mit dem Halteelement auf dem Flansch des Füllstutzens festgelegt ist. Die Abdeckung versagt bei einer Beaufschlagung aufgrund des Gasdrucks der unterschiedlichen Leistungsstufen des Gasgenerators an unterschiedlichen Stellen und gibt den ersten und zweiten Sektor des Gassacks nacheinander zur Entfaltung frei, ohne dass weitere Haltemittel erforderlich sind.

Zweckmäßigerweise weist die Abdeckung eine durchgehende Primärperforation auf, die sich über gegenüberliegende Schmalseiten in der Ebene des freien Endes des Füllstutzens sowie in der Mitte der Abdeckung von der einen zur anderen Schmalseite erstreckt, wobei die Primärperforation beim Aufblasen des Gassacks zuerst zerreißt und den ersten Sektor zur Beaufschlagung freigibt. Die Anordnung und Ausrichtung der Primärperforation hat zur Folge, dass die zerrissene Abdeckung eine relativ große Öffnung für den ersten Sektor des Gassacks freigibt.

Bevorzugt weist die Abdeckung in etwa in halber Höhe des Füllstutzens eine umlaufende Sekundärperforation auf, die beim Aufblasen des Gassacks bei einem bestimmten Gasdruck zerreißt und den zweiten Sektor zur Beaufschlagung freigibt, wobei die Abdeckung oberhalb der Sekundärperforation an dem ersten Sektor und unterhalb der Sekundärperforation an dem Flansch befestigt ist. Die Abdeckung umfasst somit das Halteelement für den zweiten Sektor, wobei nach dem Zerreißen der Primärperforation und der Sekundärperforation ein Teil der Abdeckung an dem Gassack und ein anderer Teil an dem Flansch gehalten ist.

Um eine relativ kompakte Unterbringung des zweiten Sektors an dem Airbaggehäuse sicherzustellen, bei der gleichzeitig dessen Entfaltung durch Druckbeaufschlagung gewährleistet ist, ist vorteilhafterweise der zweite Sektor leporelloartig gefaltet, wobei die Falten senkrecht zum Füllstutzen verlaufen, die unterste Falte auf dem Flansch aufliegt und die oberste Falte in einer Ebene des freien Endes des Füllstutzens angeordnet ist. Die Anzahl der Falten ist im Wesentlichen von der Höhe des Füllstutzens und die Länge der Falten im Wesentlichen von der Breite des Flansches abhängig. Diese Ausgestaltung ermöglicht eine exakte Abstimmung des Gassackes auf die Systemanforderungen.

Zweckmäßigerweise ist die in den ersten Sektor übergehende oberste Falte über das als perforiertes Halteband ausgebildete Haltemittel an dem Flansch befestigt. Das Halteband fixiert somit den gefalteten zweiten Sektor im unbeaufschlagten Zustand oberhalb des Flansches an dem Füllstutzen.

Vorzugsweise geht die oberste Falte in eine parallel zum Füllstutzen in Richtung des Flanschs verlaufende Falte über, die an einem Ende mit der untersten Falte mit dem als Reißnaht ausgebildeten Haltemittel gekoppelt ist und deren freies Ende in dem ersten Sektor mündet. Oberhalb eines bestimmten Gasdruckes zerreißt die Reißnaht und die senkrecht verlaufende Falte, die im unbeaufschlagten Zustand die leporelloartige Faltung des zweiten Sektors mittels der Reißnaht an dem Flansch hält, wird von dem ersten Sektor durch das Druckgas entfaltet. Anschließend werden durch das weiterhin einströmende Druckgas die leporelloartigen Falten des zweiten Sektors auseinandergezogen bis das gesamte Volumen des Gassacks mit Druckgas gefüllt ist.

Alternativ dazu ist zweckmäßigerweise der zweite Sektor leporelloartig gefaltet, wobei die Falten parallel zum Füllstutzen verlaufen und die in den ersten Sektor übergehende Falte über das als perforiertes Halteband ausgebildete Haltemittel an dem Flansch befestigt ist oder jeweils benachbarte Falten mittels dem als eine Reißnaht ausgebildeten Haltemittel gegeneinander befestigt sind. Die Anzahl der Falten ist im Wesentlichen von der Breite des Flanschs und die Länge der Falten im Wesentlichen von der Höhe des Füllstutzens abhängig. Das Halteband und die Reißnaht stellen adäquate Haltemittel dar, die den zweiten Sektor zusammenhalten, um eine Füllung des ersten Sektors bis zu einem bestimmten Druck sicherzustellen und bei einer weiteren Füllung des Gassacks in einer weiteren Leistungsstufe des Gasgenerators versagen, um eine Befüllung des zweiten Sektors mit Druckgas zu ermöglichen.

Zweckmäßigerweise liegt die unterste Falte des zweiten Sektors auf dem Flansch auf und geht in einen parallel sowie beabstandet zum Füllstutzen verlaufenden Abschnitt über, der in einer Ebene des freien Endes des Flansches in einen ersten waagerechten Abschnitt mündet, an den sich ein geraffter Abschnitt anschließt, der wiederum in einen mit dem ersten Sektor verbundenen zweiten waagerechten Abschnitt übergeht, wobei der zweite waagerechte Abschnitt oberhalb des ersten waagerechten Abschnittes mit demselben mit dem als Reißnaht ausgebildeten Haltemittel verbunden ist. Aufgrund dieser Faltung ist lediglich eine Reißnaht zur Verbindung des ersten waagerechten Abschnittes mit dem zweiten waagerechten Abschnitt erforderlich, um den zweiten Sektor bis zu einem bestimmten Gasdruck zusammengefaltet zu halten.

Bevorzugt ist das Halteband einstückig ausgebildet und dem Flansch zugeordnet, wobei die Perforation in etwa in halber Höhe des Flansches verläuft oder die Perforation mehrere senkrechte und waagerechte Lochreihen umfasst, die wechselseitig miteinander in Verbindung stehen, wobei die senkrechten Lochreihen im Bereich des Flansches verlaufen. Das einstückige Halteband ist relativ einfach und damit kostengünstig zu fertigen und zu montieren. Die Länge der Perforation sowie das Material des Haltebandes bestimmen im Wesentlichen den zum Aufreißen der Perforation erforderlichen Gasdruck.

Um die Halterung des zweiten Sektors im unbeaufschlagten Zustand mit einem relativ geringen Materialeinsatz zu bewerkstelligen, ist zweckmäßigerweise das Halteband mehrstückig ausgebildet und umfasst mehrere mit einer Perforation versehene Einzelhaltebänder, die gleichmäßig über den Umfang des Airbaggehäuses verteilt sind.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand mehrerer Ausführungsbeispiele unter Bezugnahme auf die zugehörigen Zeichnungen näher erläutert. Es zeigen:
- Fig. 1: bis
- Fig. 3: Darstellungen eines erfindungsgemäßen Gassacks in unterschiedlichen Zuständen,
- Fig. 4: eine Darstellung einer vergrößerten Einzelheit nach Fig. 2,
- Fig. 5: eine Darstellung des Gassacks nach einer ersten alternativen Ausgestaltung,
- Fig. 6 und Fig. 7: Darstellungen des Gassacks nach einer zweiten alternativen Ausgestaltung in unterschiedlichen Zuständen,
- Fig. 8 und Fig. 9: Darstellungen des Gassacks nach einer dritten alternativen Ausgestaltung in unterschiedlichen Zuständen,
- Fig. 10: eine Darstellung einer vergrößerten Einzelheit nach Fig. 7,
- Fig. 11: Darstellungen eines Gassacks nach einer vierten alternativen Ausgestaltung,
- Fig. 12: Darstellungen eines Gassacks nach einer fünften alternativen Ausgestaltung,
- Fig. 13 und Fig. 14: Darstellungen eines Gassacks nach einer sechsten alternativen Ausgestaltung in unterschiedlichen Zuständen,
- Fig. 15: eine Darstellung einer vergrößerten Einzelheit nach Fig. 13,
- Fig. 16 und Fig. 17: Darstellungen eines Gassacks nach einer siebten alternativen Ausgestaltung in unterschiedlichen Zuständen und
- Fig. 18: eine Darstellung einer vergrößerten Einzelheit nach Fig. 16.

Ein Gassack 1 für ein Airbagmodul ist mit seiner Öffnung an einem Füllstutzen 2 eines Airbaggehäuses 3 festgelegt. Die Befestigung erfolgt über ein Halteelement 4, das den Gassack 1 umlaufend auf einem an dem Füllstutzen 2 außenseitig angeformten Flansch 5 haltert, wobei der Gassack 1 mit einem nicht dargestellten volumengesteuerten Gasgenerator in Wirkverbindung steht. Der Gasgenerator kann mehrstufig oder stufenlos gesteuert sein.

Die Leistung des volumengesteuerten Gasgenerators wird beim Aufblasen des Gassacks 1 in Abhängigkeit von der Unfallschwere, dem Insassengewicht, der -größe und der -position angepasst und eine entsprechende Menge Druckgas in den Gassack 1 eingespeist. Durch eine mit dem Gasgenerator gekoppelte Elektronik können einzelne Leistungsstufen mit Zeitverzug oder parallel abgerufen werden, um die volle Leistung des Gasgenerators zu entfalten. Im Weiteren ist auch eine stufenlose Arbeitsweise möglich, um die Leistung des Gasgenerators exakt zu steuern. Damit der Gassack 1 in jeder Leistungsstufe des Gasgenerators optimal befüllt wird, weist der Gassack 1 ein variables Volumen auf und ist durch Haltemittel 6 in zwei Sektoren 7, 8 unterteilt. In Abhängigkeit von dem Gasdruck, der in den unterschiedlichen Leistungsstufen des Gasgenerators zur Verfügung gestellt wird, werden die beiden Sektoren 7, 8 unter Zerstörung der Haltemittel 6 nacheinander beaufschlagt.

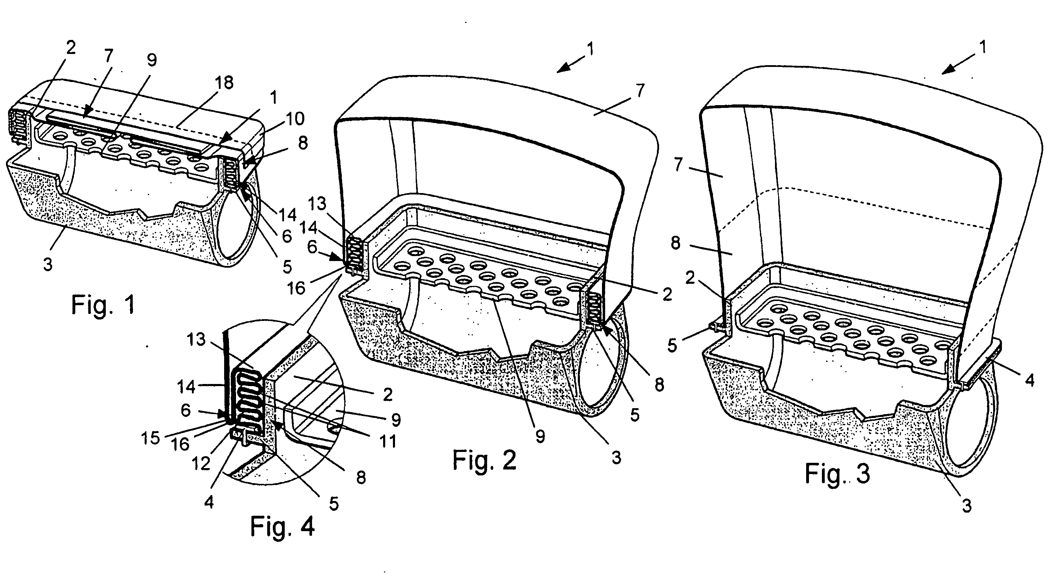

Gemäß den Fig. 1 bis 4 ist der erste Sektor 7 des Gassacks 1 oberhalb eines Diffusors 9 zwischen dem Füllstutzen 2 in dem Airbaggehäuse 3 gefaltet und von dem als einstückige Abdeckung 10 ausgebildeten Haltemittel 6 überspannt. Der zweiten Sektor 8 ist leporelloartig gefaltet, wobei die Falten 11 senkrecht zum Füllstutzen 2 ausgerichtet sind. Die unterste Falte 12 liegt auf dem Flansch 5 auf und die oberste Falte 13 ist in einer Ebene mit dem freien Ende des Füllstutzens 2 angeordnet. Die oberste Falte 13 des zweiten Sektors 8 geht in eine parallel zum Füllstutzen 2 verlaufende Falte 14 über, die sich in Richtung des Flansches 5 erstreckt und anschließend in gegenläufiger Richtung in den ersten Sektor 7 übergeht. Die parallel zum Füllstutzen 2 angeordnete Falte 14 begrenzt den gefalteten zweiten Sektor 8 nach außen und ist in ihrem Wendepunkt 15 über das als Reißnaht 16 ausgebildete Haltemittel 6 mit der untersten Falte 12 verbunden, wobei die Reißnaht 16 die zugeordneten Falten 12, 14 umlaufend zusammenhält.

Bei einem Aufblasen des Gassacks 1 in einer ersten Leistungsstufe versagt eine Perforation 17 der Abdeckung 10 und gibt den ersten Sektor 7 des Gassacks 1 zur Entfaltung frei, der vollständig mit Druckgas befüllt eine wirksame Rückhaltung für einen Insassen darstellt. Nach dem Zünden der zweiten Leistungsstufe des Gasgenerators oder der parallelen Zündung der ersten und zweiten Leistungsstufe versagt nach Erreichen eines bestimmten Gasdrucks im ersten Sektor 7 die Reißnaht 16, die den zweiten Sektor bis dahin im gefalteten Zustand zusammenhält. Nach der Zerstörung der Reißnaht 16 entfaltet sich auch der zweite Sektor 8 und das gesamte Volumen des Gassacks 1 ist mit Druckgas gefüllt.

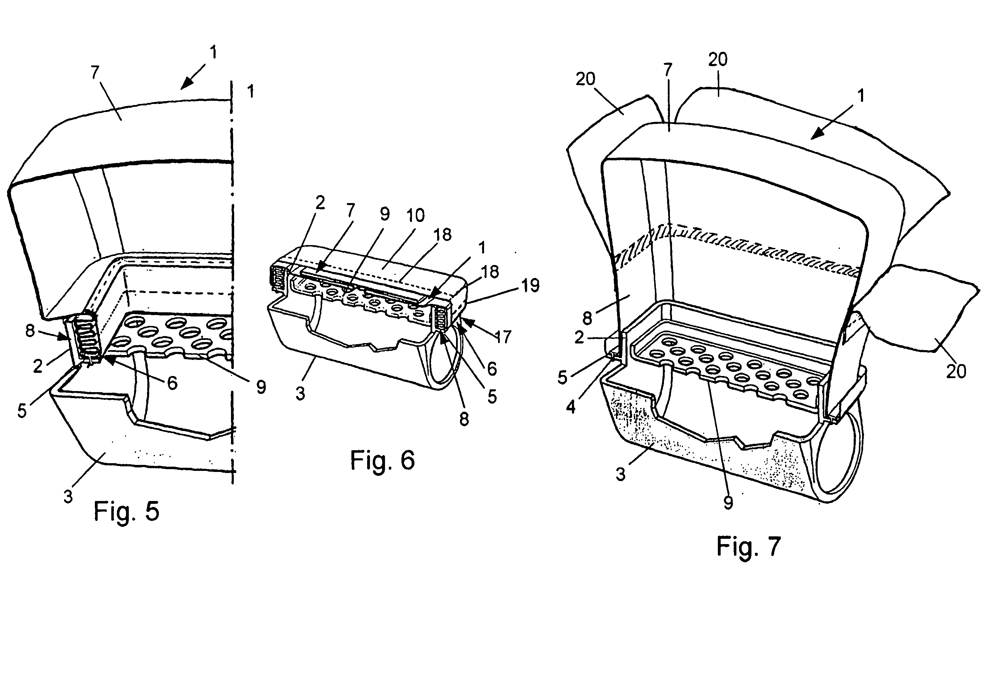

Nach Fig. 5 ist der Flansch 5 auf der Innenseite des Füllstutzens 2 ausgebildet und trägt den leporelloartig gefalteten zweiten Sektor 8 des Gassacks 1. Die weiteren Einzelheiten dieser Ausführung sind mit den zuvor geschilderten identisch.

Gemäß den Fig. 6 und 7 überspannt die Abdeckung 10 den ersten Sektor 7 und den leporelloartig gefalteten zweiten Sektor 8 des Gassacks 1, wobei das umlaufende freie Ende der Abdeckung 10 gemeinsam mit der Öffnung des Gassacks 1 mit dem Halteelement 4 auf dem Flansch 5 des Füllstutzens 2 befestigt ist. Die flexible Abdeckung 10 weist eine in der Ebene des freien Endes des Füllstutzens 2 an ihren gegenüberliegenden Schmalseiten 17 sowie eine mittig zwischen den Schmalseiten 17 verlaufende, dem ersten Sektor 7 zugeordnete Primärperforation 18 auf. Im Weiteren ist die Abdeckung 10 mit einer dem zweiten Sektor 8 zugeordneten Sekundärperforation 19 versehen, die umlaufend in etwa in halber Höhe des Füllstutzens 2 ausgebildet ist.

Beim Aufblasen des Gassacks 1 in der ersten Leistungsstufe des Gasgenerators versagt die Primärperforation 18 der Abdeckung 10, die daraufhin in biegeschlaffen Abschnitten 20 an dem Gassack 1 vorliegt und der erste Sektor 7 des Gassacks 1 entfaltet sich unter der Wirkung des Drucksgases. Nach dem Überschreiten eines bestimmten Gasinnendrucks im ersten Sektor 7 versagt in der zweiten Leistungsstufe des Gasgenerators die Sekundärperforation 19 der Abdeckung 10, wonach sich auch der zweite Sektor 8 entfaltet und das gesamte Volumen des Gassacks 1 zur Verfügung steht.

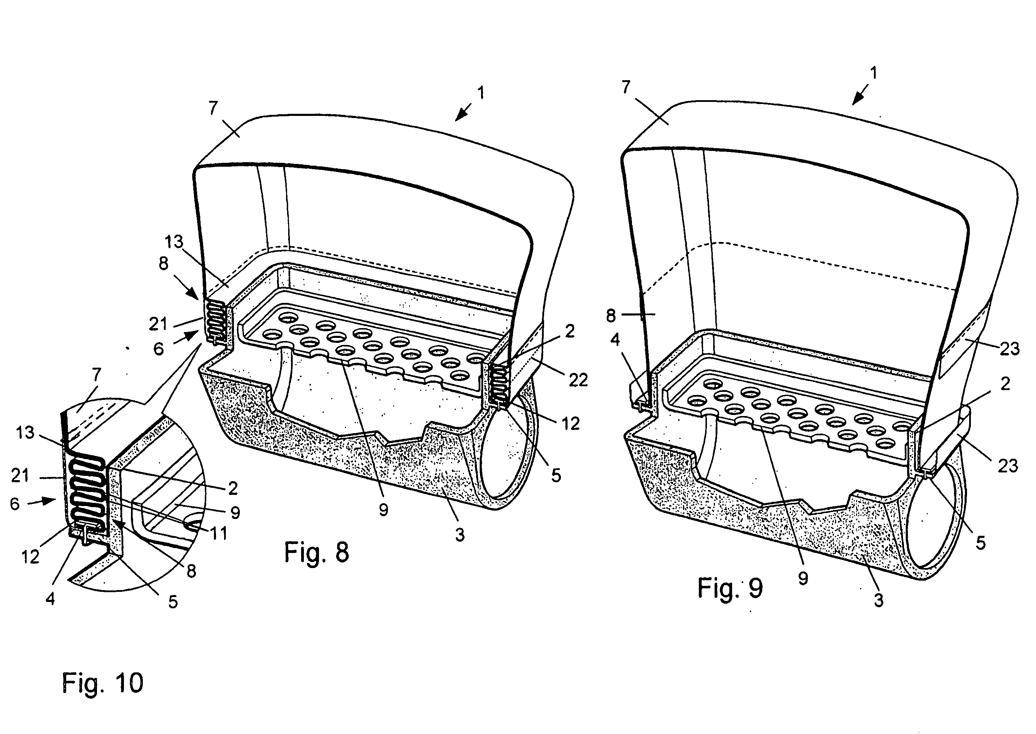

Entsprechend den Fig. 8 bis 10 ist der zweite Sektor 8 des Gassacks 1 leporelloartig um den Füllstutzen 2 gefaltet, wobei die Falten 11 senkrecht zum Füllstutzen 2 ausgerichtet sind. Die unterste Falte 12 liegt auf dem Flansch 5 auf und die oberste Falte 13, die in den ersten Sektor 7 mündet, ist in einer Ebene mit dem freien Ende des Füllstutzens 2 angeordnet. Dem zweiten Sektor 8 ist als Haltemittel 6 ein perforiertes Halteband 21 zugeordnet, das zum einen an dem Flansch 5 des Füllstutzens 2 und zum anderen in dem Bereich, in dem die oberste Falte 13 in den ersten Sektor 7 mündet, an derselben befestigt ist. Das Halteband 21 erstreckt sich umlaufend über den gesamten Umfang des zweiten Sektors 8. Die umlaufende Perforation 22 des Haltebandes 21 befindet sich in etwa in halber Höhe des Füllstutzens 2.

Bei der Zündung der zweiten Leistungsstufe des Gasgenerators versagt die Perforation 22 des Haltebandes 21, wonach sich der zweite Sektor 8 des Gassacks 1 entfaltet und das gesamte Volumen des Gassacks 1 mit Druckgas befüllt wird. Das Halteband 21 ist sonach in zwei Abschnitte 23 geteilt, von denen der eine am Gassack 1 und der andere am Flansch 5 gehalten ist.

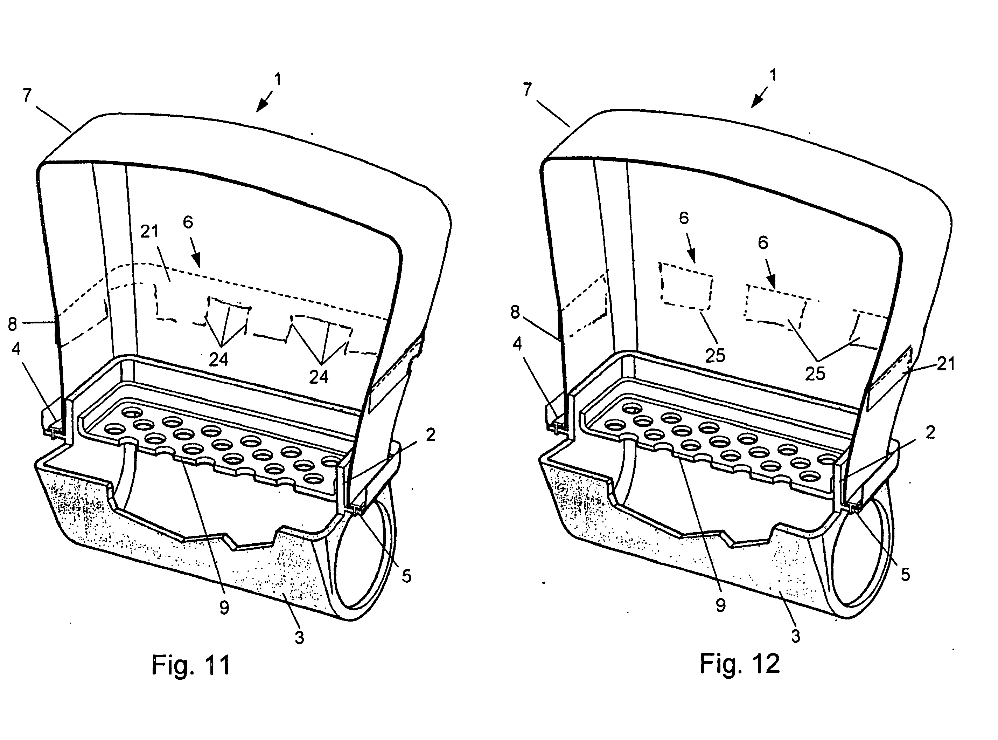

Die Perforation 22 des den zweiten Sektor 8 des Gassacks 1 umgebenden Haltebandes 21 umfasst gemäß Fig. 11 mehrere senkrechte und waagerechte Lochreihen 24, die wechselseitig ineinander übergehen. Nach dem Zerreißen des Haltebandes 21 liegt dasselbe in mehreren rechteckförmigen Abschnitten vor.

Nach Fig. 12 ist das Halteband 21 mehrstückig ausgeführt und umfasst mehrere gleichmäßig über den Umfang des zweiten Sektors 8 des Gassacks 1 verteilte Einzelhaltebänder 25, die jeweils mit der Perforation 22 versehen sind. Jedes der Einzelhaltebänder 25 ist an dem Flansch 5 und der obersten Falte 13 des zweiten Sektors 8 befestigt.

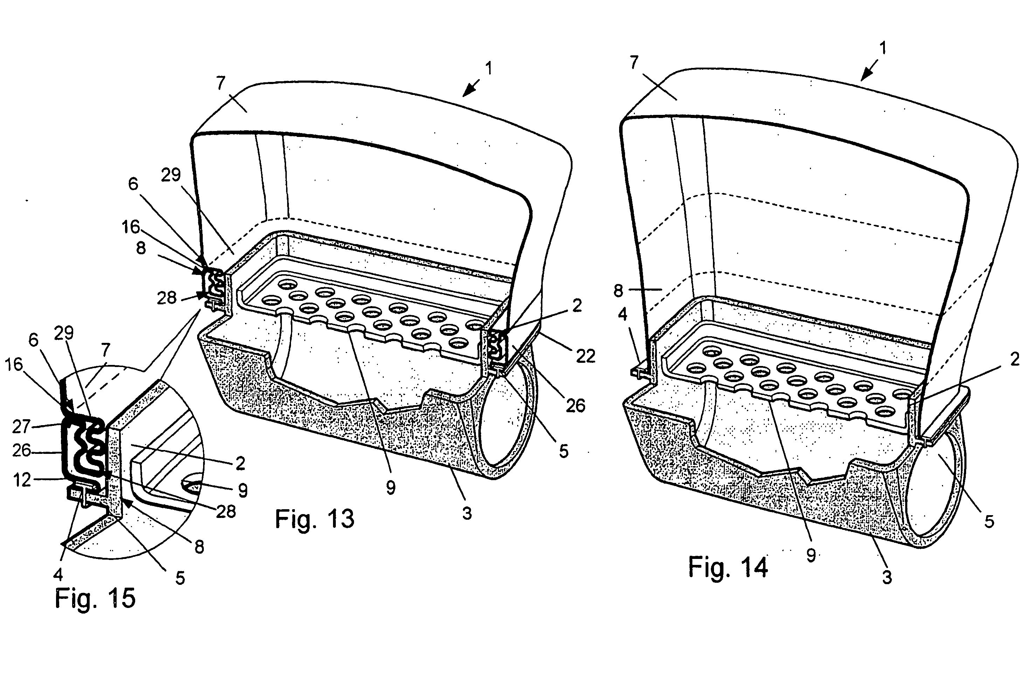

Entsprechend den Fig. 13 bis 15 ist der zweite Sektor 8 des Gassacks 1 derart zusammengefaltet, dass die unterste Falte 12 auf dem Flansch 5 festgelegt ist und in einen parallel sowie beabstandet zum Füllstutzen 2 verlaufenden Abschnitt 26 übergeht, der in einer Ebene des freien Endes des Füllstutzens 2 in einen ersten waagerechten Abschnitt 27 mündet. An den ersten waagerechten Abschnitt 27 schließt sich ein geraffter Abschnitt 28 an, der wiederum in einen mit dem ersten Sektor 7 verbundenen zweiten waagerechten Abschnitt 29 übergeht. Der zweite waagerechte Abschnitt 29 ist oberhalb des ersten waagerechten Abschnittes 27 mit dem als Reißnaht 16 ausgebildeten Haltemittel 6 mit dem ersten waagerechten Abschnitt 27 verbunden.

Bei der Zündung der zweiten Leistungsstufe des Gasgenerators versagt die dem zweiten Sektor 8 zugeordnete Reißnaht, nachdem in dem ersten Sektor 7 ein bestimmter Gasdruck herrscht und der zweite Sektor 8 wird entfaltet. Nach der Entfaltung des zweiten Sektors 8 steht das gesamte Volumen des Gassacks 1 zur Rückhaltung des Insassen zur Verfügung.

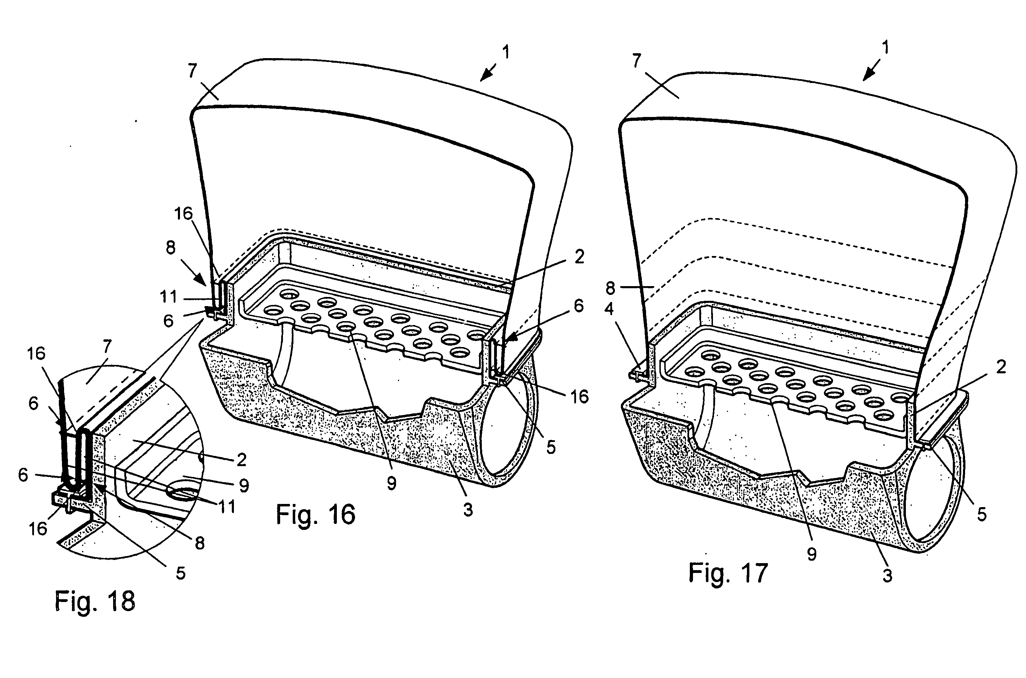

Nach den Fig. 16 bis 18 ist der zweite Sektor 8 des Gassacks 1 leporelloartig gefaltet, wobei die Falten 11 parallel zum Füllstutzen 2 verlaufen. Um den zweiten Sektor 8 bis zu einem bestimmten Gasdruck in dem gefalteten Zustand zu halten, ist die innere Falte 11 im Bereich des Flansches 5 und die äußere Falte 11 in einer Ebene des freien Endes des Füllstutzens 2 jeweils mit der umlaufenden Reißnahtl6, die das Haltemittel 6 darstellt, verbunden.

Beim Betrieb des Gasgenerators des Airbags in der zweiten Leistungsstufe zerreißen die Reißnähte 16 und der zweite Sektor 8 entfaltet sich aufgrund des in den Gassack 1 einströmenden Druckgases, so dass das gesamte Volumen des Gassacks 1 gefüllt wird.

Bei der Verwendung eines mehrstufig arbeitenden Gasgenerators können die einzelnen Sektoren des Gassacks 1 adaptiv der Leistung des Gasgenerators angepasst werden. Weist der Gasgenerator eine variable Arbeitsweise, ohne feste Abstufung der einzelnen Leistungsstufen, auf, werden entsprechende Druckniveaus in Abhängigkeit von der Systemauslegung des Airbagmoduls festgelegt, bei denen die Haltemittel 6 kaskadenartig zerstört werden.

### Bezugszeichenliste

- 1.: Gassack
- 2.: Füllstutzen
- 3.: Airbaggehäuse
- 4.: Halteelement
- 5.: Flansch
- 6.: Haltemittel
- 7.: erster Sektor
- 8.: zweiter Sektor
- 9.: Diffusor
- 10.: Abdeckung
- 11.: Falte
- 12.: unterste Falte
- 13.: oberste Falte
- 14.: Falte
- 15.: Wendepunkt von 14
- 16.: Reißnaht
- 17.: Schmalseite von 10
- 18.: Primärperforation
- 19.: Sekundärperforation
- 20.: Abschnitt
- 21.: Halteband
- 22.: Perforation
- 23.: Abschnitt
- 24.: Lochreihe
- 25.: Einzelhalteband
- 26.: Abschnitt
- 27.: Abschnitt
- 28.: Abschnitt
- 29.: Abschnitt

## Patentansprüche

1. Airbagmodul mit einem Gassack (1) mit einem adaptiven Volumen, der über seine an einem Füllstutzen (2) eines Airbaggehäuses (3) festgelegte Öffnung mit einem volumengesteuerten Gasgenerator in Wirkverbindung steht, wobei der Gassack (1) durch Haltemittel (6) in Sektoren (7, 8) unterteilt ist, die beim Aufblasen des Gassacks (1) nacheinander durch den ansteigenden Gasdruck unter Zerstörung des Haltemittels (6) beaufschlagt werden und wobei ein zuerst beaufschlagter erster Sektor (7) des Gassacks (1) in dem Airbaggehäuse (3) und ein danach beaufschlagter zweiter Sektor (8) benachbart zu dem Füllstutzen (2) gefaltet und dem ersten (7) und/oder dem zweiten Sektor (8) das Haltemittel (6) zugeordnet ist **dadurch gekennzeichnet, dass** das Haltemittel (6) als eine den zweiten Sektor (8) freigebende Perforation (19, 22) oder Reißnaht (16) gestaltet ist.

2. Airbagmodul nach Anspruch 1, **dadurch gekennzeichnet, dass** die dem zweiten Sektor (8) zugeordnete Öffnung des Gassacks (1) auf einem Flansch (5) des Füllstutzens (2) umlaufend gasdicht befestigt ist.

3. Airbagmodul nach Anspruch 1 oder 2 **dadurch gekennzeichnet, dass** die dem zweiten Sektor (8) zugeordnete Öffnung des Gassacks (1) auf einem Flansch (5) des Füllstutzens (2) mittels eines Halteelementes (4) umlaufend befestigt ist.

4. Airbagmodul nach einem der Ansprüche 1 bis 3, **dadurch gekennzeichnet, dass** der Flansch (5) auf der Außenseite des Füllstutzens (2) umlaufend angeformt ist.

5. Airbagmodul nach einem der Ansprüche 1 bis 3, **dadurch gekennzeichnet, dass** der Flansch (5) auf der Innenseite des Füllstutzens (2) umlaufend angeformt ist.

6. Airbagmodul nach einem der Ansprüche 1 bis 5, **dadurch gekennzeichnet, dass** der erste Sektor (7) in einer flächigen Packung in dem Airbaggehäuse (3) und der zweite Sektor (8) in einer im Querschnitt im Wesentlichen rechteckförmigen Packung ringförmig am inneren oder äußeren Umfang des Füllstutzens (2) gefaltet ist.

7. Airbagmodul nach einem der Ansprüche 1 bis 6, **dadurch gekennzeichnet, dass** das dem ersten Sektor (7) zugeordnete Haltemittel (6) als eine einstückige Abdeckung (10) des Gassacks (1) ausgebildet ist, die das Airbaggehäuse (3) zur Überdeckung zumindest des ersten Sektors (7) bereichsweise überspannt und end-seitig an einer dem zweiten Sektor (8) zugeordneten Falte (14) befestigt ist.

8. Airbagmodul nach einem der Ansprüche 1 bis 6, **dadurch gekennzeichnet, dass** die Abdeckung (10) dem ersten (7) und dem zweiten Sektor (8) zugeordnet ist und mit dem Halteelement (4) auf dem Flansch (5) des Füllstutzens (2) festgelegt ist.

9. Airbagmodul nach Anspruch 7 oder 8, **dadurch gekennzeichnet, dass** die Abdeckung (10) eine durchgehende Primärperforation (18) aufweist, die sich über gegenüberliegende Schmalseiten (17) in der Ebene des freien Endes des Füllstutzens (2) sowie in der Mitte der Abdeckung (10) von der einen zur anderen Schmalseite (17) erstreckt, wobei die Primärperforation (18) beim Aufblasen des Gassacks (1) zuerst zerreißt und den ersten Sektor (7) zur Beaufschlagung freigibt.

10. Airbagmodul nach Anspruch 7 oder 8, **dadurch gekenn** **zeichnet, dass** die Abdeckung (10) in etwa in halber Höhe des Füllstutzens (2) eine umlaufende Sekundärperforation (19) aufweist, die beim Aufblasen des Gassacks (1) bei einem bestimmten Gasdruck zerreißt und den zweiten Sektor (8) zur Beaufschlagung freigibt, wobei die Abdeckung (10) oberhalb der Sekundärperforation (19) an dem ersten Sektor (7) und unterhalb der Sekundärperforation (19) an dem Flansch (5) befestigt ist.

11. Airbagmodul nach einem der Ansprüche 1 bis 10, **dadurch gekennzeichnet, dass** der zweite Sektor (8) leporelloartig gefaltet ist, wobei die Falten (11) senkrecht zum Füllstutzen (2) verlaufen, die unterste Falte (12) auf dem Flansch (5) aufliegt und die oberste Falte (13) in einer Ebene des freien Endes des Füllstutzens (2) angeordnet ist.

12. Airbagmodul nach Anspruch 11, **dadurch gekennzeichnet, dass** die in den ersten Sektor (7) übergehende oberste Falte (13) über das als perforiertes Halteband (21) ausgebildete Haltemittel (6) an dem Flansch (5) befestigt ist.

13. Airbagmodul nach Anspruch 11, **dadurch gekennzeichnet, dass** die oberste Falte (13) in eine parallel zum Füllstutzen (2) in Richtung des Flanschs (5) verlaufende Falte (14) übergeht, die an einem Ende mit der untersten Falte (12) mit dem als Reißnaht (16) ausgebildeten Haltemittel (6) gekoppelt ist und deren freies Ende in dem ersten Sektor (7) mündet.

14. Airbagmodul nach einem der Ansprüche 1 bis 6, **dadurch gekennzeichnet, dass** der zweite Sektor (8) leporelloartig gefaltet ist, wobei die Falten (11) parallel zum Füllstutzen verlaufen und die in den ersten Sektor (7) übergehende Falte (11) über das als perforiertes Halteband (21) ausgebildete Haltemittel (6) an dem Flansch (5) befestigt ist oder jeweils benachbarte Falten (11) mittels dem als eine Reißnaht (16) ausgebildeten Haltemittel (6) gegeneinander befestigt sind.

15. Airbagmodul nach einem der Ansprüche 1 bis 6, **dadurch gekennzeichnet, dass** die unterste Falte (12) des zweiten Sektors (8) auf dem Flansch (5) aufliegt und in einen parallel sowie beabstandet zum Füllstutzen (2) verlaufenden Abschnitt (26) übergeht, der in einer Ebene des freien Endes des Füllstutzens (2) in einen ersten waagerechten Abschnitt (27) mündet, an den sich ein geraffter Abschnitt (28) anschließt, der wiederum in einen mit dem ersten Sektor (7) verbundenen zweiten waagerechten Abschnitt (29) übergeht, wobei der zweite waagerechte Abschnitt (29) oberhalb des ersten waagerechten Abschnittes (27) mit demselben mit dem als Reißnaht (16) ausgebildeten Haltemittel (6) verbunden ist.

16. Airbagmodul nach Anspruch 12 oder 14, **dadurch gekennzeichnet, dass** das Halteband (21) einstückig ausgebildet und dem Flansch (5) zugeordnet ist, wobei die Perforation (22) in etwa in halber Höhe des Füllstutzens (2) verläuft oder die Perforation (22) mehrere senkrechte und waagerechte Lochreihen (24) umfasst, die wechselseitig miteinander in Verbindung stehen, wobei die senkrechten Lochreihen (24) im Bereich des Flansches (5) verlaufen.

17. Airbagmodul nach Anspruch 12 oder 14, **dadurch gekennzeichnet, dass** das Halteband (21) mehrstückig ausgebildet ist und mehrere mit einer Perforation (22) versehene Einzelhaltebänder (25) umfasst, die gleichmäßig über den Umfang des Airbaggehäuses (3) verteilt sind.

## Claims

1. Airbag module having an airbag (1) of adaptable volume, which is operably connected by its opening fastened to a filler neck (2) of an airbag housing (3) to a volume-controlled gas generator, wherein the airbag (1) is subdivided by retaining means (6) into sectors (7, 8), which during inflation of the airbag (1) are successively loaded by the rising gas pressure together with destruction of the retaining means (6) and wherein a first sector (7) of the airbag (1) that is loaded first is folded in the airbag housing (3) and a subsequently loaded second sector (8) is folded adjacent to the filler neck (2) and the retaining means (6) is associated with the first sector (7) and/or the second sector (8),
**characterized in that** the retaining means (6) takes the form of a perforation (19, 22) or tearing seam (16) that releases the second sector (8).

2. Airbag module according to claim 1, **characterized in that** the opening of the airbag (1) associated with the second sector (8) is fastened peripherally in a gas-proof manner on a flange (5) of the filler neck (2).

3. Airbag module according to claim 1 or 2, **characterized in that** the opening of the airbag (1) associated with the second sector (8) is fastened peripherally by means of a retaining element (4) on a flange (5) of the filler neck (2).

4. Airbag module according to one of claims 1 to 3,
**characterized in that** the flange (5) is formed peripherally at the outside of the filler neck (2).

5. Airbag module according to one of claims 1 to 3,
**characterized in that** the flange (5) is formed peripherally at the inside of the filler neck (2).

6. Airbag module according to one of claims 1 to 5,
**characterized in that** the first sector (7) is folded in a flat pack in the airbag housing (3) and the second sector (8) is folded in an, in cross section, substantially rectangular pack in an annular manner on the inner or outer periphery of the filler neck (2).

7. Airbag module according to one of claims 1 to 6,
**characterized in that** the retaining means (6) associated with the first sector (7) takes the form of a one-piece cover (10) of the airbag (1), which cover partly spans the airbag housing (3) in order to overlap at least the first sector (7) and is fastened at the end to a fold (14) associated with the second sector (8).

8. Airbag module according to one of claims 1 to 6,
**characterized in that** the cover (10) is associated with the first (7) and the second sector (8) and is fastened by the retaining element (4) on the flange (5) of the filler neck (2).

9. Airbag module according to claim 7 or 8, **characterized in that** the cover (10) has a continuous primary perforation (18), which extends over opposite narrow sides (17) level with the free end of the filler neck (2) as well as in the middle of the cover (10) from one narrow side (17) to the other, wherein during inflation of the airbag (1) the primary perforation (18) tears first and enables loading of the first sector (7).

10. Airbag module according to claim 7 or 8, **characterized in that** the cover (10) at approximately mid-height of the filler neck (2) has a peripheral secondary perforation (19), which during inflation of the airbag (1) tears at a specific gas pressure and enables loading of the second sector (8), wherein the cover (10) is fastened above the secondary perforation (19) to the first sector (7) and below the secondary perforation (19) to the flange (5).

11. Airbag module according to one of claims 1 to 10,
**characterized in that** the second sector (8) is fan-folded, wherein the folds (11) extend at right angles to the filler neck (2), the bottom fold (12) rests on the flange (5) and the top fold (13) is disposed level with the free end of the filler neck (2).

12. Airbag module according to claim 11, **characterized in that** the top fold (13) running into the first sector (7) is fastened to the flange (5) by the retaining means (6) in the form of a perforated retaining band (21).

13. Airbag module according to claim 11, **characterized in that** the top fold (13) runs into a fold (14), which extends parallel to the filler neck (2) in the direction of the flange (5) and is coupled at one end to the bottom fold (12) by the retaining means (6) in the form of a tearing seam (16) and the free end of which opens in the first sector (7).

14. Airbag module according to one of claims 1 to 6,
**characterized in that** the second sector (8) is fan-folded, wherein the folds (11) extend parallel to the filler neck and the fold (11) running into the first sector (7) is fastened by the retaining means (6) in the form of a perforated retaining band (21) to the flange (5) or in each case adjacent folds (11) are mutually fastened by means of the retaining means (6) in the form of a tearing seam (16).

15. Airbag module according to one of claims 1 to 6,
**characterized in that** the bottom fold (12) of the second sector (8) rests on the flange (5) and runs into a portion (26), which extends parallel to and at a spacing from the filler neck (2) and runs, level with the free end of the filler neck (2), into a first horizontal portion (27) adjoined by a gathered portion (28), which in turn runs into a second horizontal portion (29) connected to the first sector (7), wherein the second horizontal portion (29) is connected above the first horizontal portion (27) to the latter by the retaining means (6) in the form of a tearing seam (16).

16. Airbag module according to claim 12 or 14,
**characterized in that** the retaining band (21) is of an integral construction and is associated with the flange (5), wherein the perforation (22) extends at approximately mid-height of the filler neck (2) or the perforation (22) comprises a plurality of vertical and horizontal rows of holes (24), which are alternately connected to one another, wherein the vertical rows of holes (24) extend in the region of the flange (5).

17. Airbag module according to claim 12 or 14,
**characterized in that** the retaining band (21) is of a multi-piece construction and comprises a plurality of individual retaining bands (25), which are provided with a perforation (22) and distributed uniformly over the periphery of the airbag housing (3).

## Revendications

1. Module d'airbag avec un coussin gonflable (1) de volume variable, relié grâce à son ouverture définie contre une tubulure de remplissage (2) d'un logement d'airbag (3), à un générateur de gaz contrôlé en volume, pour fonctionner, tandis que le coussin gonflable (1) est réparti en secteurs (7, 8) par un moyen de retenue (6), qui sont sollicités l'un après l'autre du fait de la pression de gaz croissante lorsque le coussin gonflable (1) se remplit et que le moyen de retenue (6) se détruisent, tandis qu'un premier secteur (7) du coussin gonflable (1) sollicité en premier dans le logement d'airbag (3) et un second secteur (8) sollicité ensuite et voisin de la tubulure de remplissage (2) sont repliés et que le moyen de retenue (6) est associé du premier (7) et/ou au second secteur (8), **caractérisé en ce que** le moyen de retenue (6) prend la forme de perforation (19, 22) ou de couture d'arrachement (16) libérant le second secteur (8).

2. Module d'airbag selon la revendication 1, **caractérisé en ce que** l'ouverture, associée au second secteur (8), du coussin gonflable (1) est fixée sur une bride (5) de la tubulure de remplissage (2), de manière étanche au gaz sur toute sa circonférence.

3. Module d'airbag selon la revendication 1 ou 2, **caractérisé en ce que** l'ouverture, associée au second secteur (8), du coussin gonflable (1) est fixée sur une bride (5) de la tubulure de remplissage (2), à l'aide d'un élément de retenue (4) sur toute sa circonférence.

4. Module d'airbag selon l'une des revendications 1 à 3, **caractérisé en ce que** la bride (5) est conformée sur toute la circonférence sur la face externe de la tubulure de remplissage (2).

5. Module d'airbag selon l'une des revendications 1 à 3, **caractérisé en ce que** la bride (5) est conformée sur toute la circonférence sur la face interne de la tubulure de remplissage (2).

6. Module d'airbag selon l'une des revendications 1 à 5, **caractérisé en ce que** le premier secteur (7) est plié dans un conditionnement plat dans le logement d'airbag (3) et le second secteur (8) dans un conditionnement de section sensiblement rectangulaire, de forme annulaire sur le contour intérieur ou extérieur de la tubulure de remplissage (2).

7. Module d'airbag selon l'une des revendications 1 à 6, **caractérisé en ce que** le moyen de retenue (6) associé au premier secteur (7) prend la forme de revêtement d'une seule pièce (10) du coussin gonflable (1), qui recouvre localement au moins le premier secteur (7) du logement d'airbag (3) et se fixe en sa partie d'extrémité au niveau d'un pli (14) associé au second secteur (8).

8. Module d'airbag selon l'une des revendications 1 à 6, **caractérisé en ce que** le revêtement (10) est associé au premier (7) et au second (8) secteurs et fixé avec l'élément de retenue (4) sur la bride (5) de la tubulure de remplissage (2).

9. Module d'airbag selon la revendication 7 ou 8, **caractérisé en ce que** le revêtement (10) présente une perforation primaire continue (18), qui s'étend sur des côtés étroits opposés (17) dans le plan de l'extrémité libre de la tubulure de remplissage (2) de même qu'au milieu du revêtement (10) d'un côté étroit à l'autre, tandis que la perforation primaire (18) s'arrache d'abord lors du remplissage du coussin gonflable (1) et libère le premier secteur (7) pour son actionnement.

10. Module d'airbag selon la revendication 7 ou 8, **caractérisé en ce que** le revêtement (10) présente une perforation secondaire (19) circonférentielle à peu près à mi-hauteur de la tubulure de remplissage (2), perforation qui se déchire lors du remplissage du coussin gonflable (1) à une pression de gaz donnée et qui libère le second secteur (8) pour son actionnement, tandis que le revêtement (10) au-dessus de la perforation secondaire (19) est fixé sur le premier secteur (7) et sous la perforation secondaire (19) contre la bride (5).

11. Module d'airbag selon l'une des revendications 1 à 10, **caractérisé en ce que** le second secteur (8) est replié en accordéon, tandis que les plis (11) s'étendent perpendiculairement à la tubulure de remplissage (2), le pli le plus bas (12) repose sur la bride et le pli le plus haut (13) est disposé dans le même plan de l'extrémité libre de la tubulure de remplissage (2).

12. Module d'airbag selon la revendication 11, **caractérisé en ce que** le pli le plus haut (13) se prolongeant par le premier secteur (7) est fixé contre la bride (5) par le biais du moyen de retenue (6) réalisé sous forme de bande de retenue perforée (21).

13. Module d'airbag selon la revendication 11, **caractérisé en ce que** le pli le plus haut (13) se prolonge par un pli (14) s'étendant parallèlement à la tubulure de remplissage (2) dans la direction de la bride (5), qui est couplé à une extrémité avec le pli le plus bas (12), avec le moyen de retenue (6) réalisé comme couture d'arrachement (6) et dont l'extrémité libre débouche dans le premier secteur (7).

14. Module d'airbag selon l'une des revendications 1 à 6, **caractérisé en ce que** le second secteur (8) est replié en accordéon, tandis que les plis (11) s'étendent parallèlement à la tubulure de remplissage et que le pli (11) se prolongeant par le premier secteur (7) est fixé contre la bride (5) par le biais du moyen de retenue (6) sous forme de bande de retenue perforée (21) ou que les différents plis voisins (11) sont fixés l'un contre l'autre à l'aide du moyen de retenue (6) réalisé comme une couture d'arrachement (16).

15. Module d'airbag selon l'une des revendications 1 à 6, **caractérisé en ce que** le pli le plus bas (12) du second secteur (8) est disposé sur la bride (5) et se prolonge par un tronçon (26) s'étendant parallèlement à et à distance de la tubulure de remplissage (2) et qui débouche dans un plan de l'extrémité libre de la tubulure (2) dans un premier tronçon horizontal (27) auquel se raccorde un tronçon contracté (28), qui se prolonge à son tour par un deuxième tronçon horizontal (29) relié au premier secteur (7), ce deuxième tronçon horizontal (29) étant relié au-dessus du premier tronçon horizontal (27) avec celui-ci par le biais du moyen de retenue (6) réalisé sous forme de couture d'arrachement (16).

16. Module d'airbag selon la revendication 12 ou 14, **caractérisé en ce que** la bande de retenue (21) est d'une seule pièce et solidarisée avec la bride (5), tandis que la perforation (22) s'étend à peu près à mi-hauteur de la tubulure (2) ou bien **en ce que** la perforation (22) englobe plusieurs rangées (24) perforées verticales et horizontales, reliées entre elles de manière alternée, les rangées perforées verticales (24) s'étendant dans la zone de la bride (5).

17. Module d'airbag selon la revendication 12 ou 14, **caractérisé en ce que** la bande de retenue (21) est composée de plusieurs parties et englobe plusieurs bandes de retenue individuelles (25) pourvues d'une perforation (22), réparties de manière régulière à la périphérie du logement d'airbag (3).
